# EUROPEAN PATENT SPECIFICATION

(11) **EP 3 493 944 B1**
(45) Date of publication and mention of the grant of the patent: **02.11.2022**
(21) Application number: 17777952.7
(22) Date of filing: 01.08.2017
(51) Int. Cl.: B23Q 1/00, B23B 31/163

(54) **LOCKING DEVICE FOR A SYMMETRIC CYLINDRICAL BODY FIXING A SEMI-FINISHED PRODUCT TO A WORKSTATION**
VERRIEGELUNGSVORRICHTUNG FÜR EINEN SYMMETRISCHEN ZYLINDRISCHEN KÖRPER ZUR BEFESTIGUNG EINES HALBZEUGS AN EINER ARBEITSSTATION
DISPOSITIF DE VERROUILLAGE DESTINÉ À UN CORPS CYLINDRIQUE SYMÉTRIQUE FIXANT UN PRODUIT SEMI-FINI À UN POSTE DE TRAVAIL

(30) Priority: 03.08.2016 IT 201600081450 U
(43) Date of publication of application: 12.06.2019
(73) Proprietor: Rem Industrie S.R.L., 35123 Padova (IT)
(72) Inventor: PICCOLO, Sebastiano, 35012 Camposampiero (IT)
(74) Representative: Maroscia, Antonio
(86) International application number: PCT/IB2017/054693
(87) International publication number: WO 2018/025175

(56) References cited:
- EP-A1- 1 952 922
- EP-A1- 2 363 225
- US-A- 406 857

## Description

The present invention relates to a locking device for a symmetric cylindrical body fixing a semi-finished product to a workstation.

Currently, for the reversible locking of a semi-finished product ahead of machining, such as chip-forming machining, modular support systems are known which comprise a plurality of different components designed to be combined so as to provide a stable, safe and precise support in order to keep a semi-finished product in a precise preset position available to machine tools.

Modular support systems which comprise a symmetric cylindrical body provided at one end with a centering collar and in a central region with a perimetric recess that forms an engagement undercut for a corresponding locking device are currently known and increasingly widespread owing to their practicality and functionality.

This locking device generally comprises an annular locking body with movable jaws, which in turn comprises a base plate that supports a cam mechanism for the movement in a radial direction of a plurality of movable engagement jaws, said cam mechanism comprising a rotatable jaw supporting ring, which is adapted to be rotated by means of a threaded actuation element, which is screwed into a corresponding hole in said base plate, designed to act on an operation tab that extends from said rotatable jaw supporting ring.

By rotating the threaded actuation element, the rotation of the jaw supporting ring is achieved which, by virtue of the cam mechanism, causes the advancement or retraction in a radial direction of the jaws, which enter or exit from the perimetric engagement recess of the symmetric cylindrical body to which a semi-finished product is fixed.

An example of this known locking device is disclosed in EP 2 363 225, which forms the basis of the preamble of appended claim 1.

In various locking and testing trials, known locking devices reveal limitations and criticalities which might lead to malfunctions, failures, or at least to less than optimum operation of the system.

An important problem is constituted by the threaded actuation element; said threaded actuation element comprises
- a threaded head portion, screwed to a corresponding complementarily threaded first internal portion of said hole,
- a central portion having a reduced cross-section which is adapted to accommodate the operation tab of the jaw supporting ring,
- and a tail portion, which also is threaded and is adapted to be screwed to a corresponding complementarily threaded second external portion of said hole.

This double thread can be harmful; in fact, if the threaded actuation element is tightened with excessive torque, once the jaws have reached position, the central portion having a narrower cross-section is subjected to excessive torsion, with the risk of breakage.

The aim of the present invention is to provide a locking device for a symmetric cylindrical body fixing a semi-finished product to a workstation that is capable of obviating the limitations of similar known devices.

Within this aim, an object of the invention is to provide a device that allows tightening of the threaded actuation element without particular dangers arising from a particularly high tightening torque.

Another object of the invention is to provide a device that in any case has a performance, effectiveness and durability that are not lower than similar devices of the known type.

This aim, as well as these and other objects which will become better apparent hereinafter, are achieved by a locking device for a symmetric cylindrical body fixing a semi-finished product to a workstation according to claim 1.

Further characteristics and advantages of the invention will become better apparent from the description of a preferred but not exclusive embodiment of the locking device according to the invention, illustrated by way of non-limiting example in the accompanying drawings, wherein:
Figure 1 is a perspective cutout view of a device according to the invention;
Figure 2 is a perspective view of a detail of Figure 1;

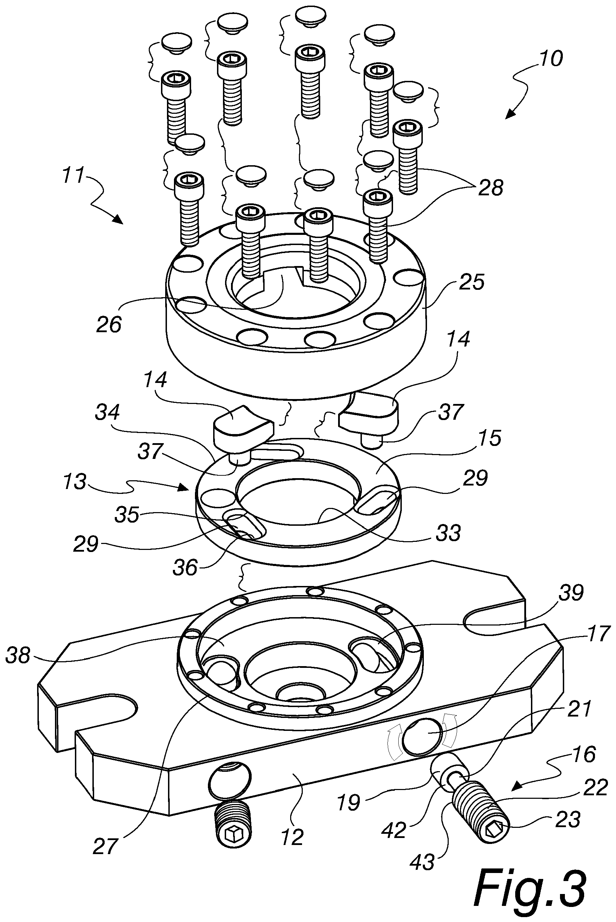

Figure 3 is a perspective view of a detail of the invention;
Figure 4 is an exploded perspective view of the device according to the invention.

With reference to the figures, a locking device for a symmetric cylindrical body fixing a semi-finished product to a workstation is designated generally by the reference numeral 10.

The locking device 10 comprises:
- an annular locking body with movable jaws 11, which in turn comprises a base plate 12 supporting a cam mechanism 13 for moving in a radial direction a plurality of movable engagement jaws 14;
- the cam mechanism 13 comprises a rotatable jaw supporting ring 15, which is adapted to be rotated by means of a threaded actuation element 16, which is screwed into a corresponding hole 17 in the base plate 12; the threaded actuation element 16 is designed to act on an operation tab 18 which extends from the rotatable jaw supporting ring 15.

The threaded actuation element 16 comprises:
- a smooth head portion 19, arranged so as to translate in a corresponding first internal guiding portion 20 of the hole 17,
- a central portion 21 having a reduced cross-section, which is adapted to accommodate the operation tab 18 of the jaw supporting ring 15,
- and a threaded tail portion 22, with a contoured recess 23 for a screwing tool, which is adapted to be screwed to a corresponding complementarily threaded second external portion 24 of the hole 17.

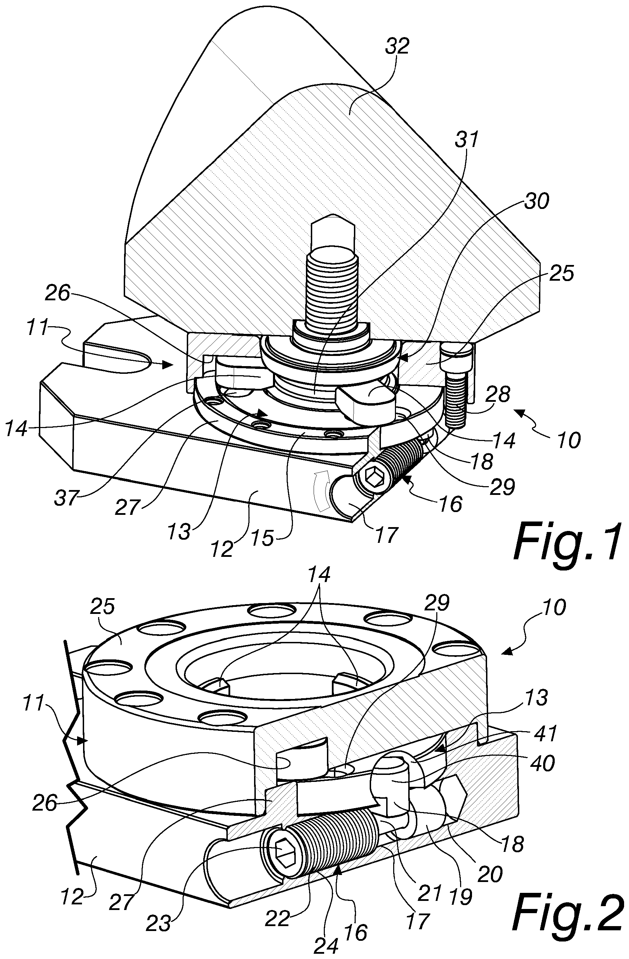

In Figure 1, the locking device 10 1s shown in the active configuration with a symmetric cylindrical part supporting body 30 inside it and with the movable jaws 14 inserted in an external perimetric engagement recess 31 thereof.

The part supporting body 30 is shown fixed to a generic semi-finished product 32.

According to the invention, the annular locking body 11 comprises an annular cover 25 with radial seats 26 for the jaws 14; the annular cover 25 is fixed to a corresponding annular protrusion 27, which is formed on the base plate 12 by means of a series of screws 28.

The cam mechanism 13 comprises the rotatable jaw supporting ring 15, with the operation tab 18, slotted seats 29 being provided on the rotatable jaw supporting ring 15, one for each movable engagement jaw 14; said slotted seats extend in a tangential direction with respect to an internal perimeter 33 of the rotatable ring 15, so that a first internal end 35 of each slot 29 is proximate to the internal perimeter 33, while the opposite end 36 of the same slot 29 is proximate to the external perimeter 34 of the rotatable ring 15.

Each one of the movable engagement jaws 14 is provided with a cylindrical operation shank 37 which is inserted in a corresponding slot 29.

The rotatable jaw supporting ring 15 is inserted in a corresponding seat 38 that is formed on the base plate 12, said seat having a lower through opening 39 for the passage and movement of the operation tab 18 in the hole 17, available to the threaded actuation element 16.

The rotation of the rotatable jaw supporting ring 15, determined by the screwing or unscrewing of the threaded actuation element 16, entails the redirection of the cylindrical shanks 37 in the slots 29 from a more inward radial position to a more outward radial position or vice versa, the movement of the cylindrical shanks 37 causing the consequent radial movement of the associated movable engagement jaws 14 within the radial seats 26 formed in the annular cover 25.

In the present exemplary embodiment, which does not limit the invention, the operation tab 18 extends from a cylindrical insert 40 which is inserted rotatably in a complementarily shaped seat 41 formed on the rotatable jaw supporting ring 15.

In practice it has been found that the invention achieves the intended aim and objects.

In particular, the invention provides a device that allows the tightening of the threaded actuation element without particular dangers arising from a particularly high tightening torque, by virtue of the threaded actuation element provided with a single threaded portion and with a non-threaded guiding portion; in the absence of the double thread that is typical of known devices, even if the threaded actuation element is tightened with excessive torque, once the jaws have reached position the central portion having a reduced cross-section in any case is not subjected to excessive torsion, with no consequent breakage risk.

Moreover, the invention provides a device that in any case has a performance, effectiveness and durability which are not lower than similar devices of the known type.

The invention thus conceived is susceptible of numerous modifications and variations, as long as they fall under the scope of the appended claims.

## Claims

1. A locking device (10) for a symmetric cylindrical body fixing a semi-finished product to a workstation, comprises:
- an annular locking body (11) with a plurality of movable engagement jaws (14), which in turn comprises a base plate (12) which supports a cam mechanism (13) for moving in a radial direction said plurality of movable engagement jaws (14),
- said cam mechanism (13) comprising a rotatable jaw supporting ring (15), which is adapted to be rotated by means of a threaded actuation element (16), which is screwed into a corresponding hole (17) in said base plate (12) and is designed to act on an operation tab (18) which extends from said rotatable jaw supporting ring (15),
said threaded actuation element (16) comprising:
- a smooth head portion (19), arranged so as to translate in a corresponding first internal guiding portion (20) of said hole (17),
- a central portion (21) having a reduced cross-section, which is adapted to accommodate the operation tab (18) of the jaw supporting ring (15),
- and a threaded tail portion (22), with a contoured recess (23) for a screwing tool, which is adapted to be screwed to a corresponding complementarily threaded second external portion (24) of said hole (17),
**characterized in that** said annular locking body (11) comprises an annular cover (25) with radial seats (26) for the movable engagement jaws (14), said annular cover (25) being fixed to a corresponding annular protrusion (27) that is formed on the base plate (12).

2. The device according to claim 1, **characterized in that** said cam mechanism (13) comprises said rotatable jaw supporting ring (15), with the operation tab (18), slotted seats (29) being provided on said rotatable jaw supporting ring (15), one for each movable engagement jaw (14), said slotted seats (29) extending in a tangential direction with respect to an internal perimeter (33) of the rotatable ring (15), so that a first internal end (35) of each slot (29) is proximate to the internal perimeter (33), while the opposite end (36) of said slot (29) is proximate to the external perimeter (34) of said rotatable jaw supporting ring (15).

3. The device according to one of the preceding claims, **characterized in that** each one of the movable engagement jaws (14) is provided with a cylindrical operation shank (37) inserted in a corresponding slot (29).

4. The device according to one of the preceding claims, **characterized in that** said rotatable jaw supporting ring (15) is inserted in a corresponding seat (38) formed on the base plate (12), said seat being provided with a lower through opening (39) for passage and movement of the operation tab (18) in the hole (17), available to the threaded actuation element (16).

5. The device according to one of the preceding claims, **characterized in that** the operation tab (18) extends from a cylindrical insert (40) that is inserted rotatably in a complementarily shaped seat (41) formed on the rotatable jaw supporting ring (15).

## Patentansprüche

1. Eine Verriegelungsvorrichtung (10) für einen symmetrischen zylindrischen Körper, die ein halbfertiges Produkt an einer Arbeitsstation befestigt, umfasst:
- einen ringförmigen Verriegelungskörper (11) mit mehreren beweglichen Eingriffsbacken (14), der wiederum eine Grundplatte (12) umfasst, die einen Nockenmechanismus (13) zum Bewegen der mehreren beweglichen Eingriffsbacken (14) in radialer Richtung trägt,
wobei der Nockenmechanismus (13) einen drehbaren Klemmbackenstützring (15) umfasst, der angepasst ist, um mittels eines Gewindebetätigungselements (16) gedreht zu werden, das in ein entsprechendes Loch (17) in der Grundplatte (12) geschraubt ist und dazu ausgelegt ist, auf eine Betätigungslasche (18) einzuwirken, die sich von dem drehbaren Klemmbackenstützring (15) erstreckt,
wobei das Gewindebetätigungselement (16) umfasst:
- einen glatten Kopfabschnitt (19), der so angeordnet ist, dass er sich in einem entsprechenden ersten inneren Führungsabschnitt (20) des Lochs (17) verschiebt,
- einen Mittelabschnitt (21) mit reduziertem Querschnitt, der geeignet ist, die Betätigungslasche (18) des Klemmbackenstützrings (15) aufzunehmen,
und einen mit Gewinde versehenen Endabschnitt (22) mit einer konturierten Aussparung (23) für ein Schraubwerkzeug, das angepasst ist, um an einen entsprechenden, komplementär mit Gewinde versehenen, zweiten äußeren Abschnitt (24) des Lochs (17) geschraubt zu werden,
**dadurch gekennzeichnet, dass** der ringförmige Verriegelungskörper (11) eine ringförmige Abdeckung (25) mit radialen Sitzen (26) für die beweglichen Eingriffsbacken (14) umfasst, wobei die ringförmige Abdeckung (25) an einem entsprechenden ringförmigen Vorsprung (27) befestigt ist, die auf der Grundplatte (12) ausgebildet ist.

2. Vorrichtung nach Anspruch 1, **dadurch gekennzeichnet, dass** der Nockenmechanismus (13) den drehbaren Backenstützring (15) mit der Betätigungslasche (18) umfasst, wobei geschlitzte Sitze (29) auf dem drehbaren Backenstützring (15) vorgesehen sind, einer für jede bewegliche Eingriffsbacke (14), wobei sich die geschlitzten Sitze (29) in einer tangentialen Richtung bezüglich eines inneren Umfangs (33) des drehbaren Rings (15) erstrecken, so dass ein erstes inneres Ende (35) jedes Schlitzes (29) nahe dem inneren Umfang (33) liegt, während das gegenüberliegende Ende (36) des Schlitzes (29) nahe dem äußeren Umfang (34) des drehbaren Backenstützring (15) liegt.

3. Vorrichtung nach einem der vorhergehenden Ansprüche, **dadurch gekennzeichnet, dass** jede der beweglichen Eingriffsbacken (14) mit einem zylindrischen Betätigungsschaft (37) versehen ist, der in einen entsprechenden Schlitz (29) eingesetzt ist.

4. Vorrichtung nach einem der vorangehenden Ansprüche, **dadurch gekennzeichnet, dass** der drehbare Backenstützring (15) in eine entsprechende Aufnahme (38) eingesetzt ist, die an der Grundplatte (12) ausgebildet ist, wobei der Sitz mit einer unteren Durchgangsöffnung (39) für den Durchgang und die Bewegung der Betätigungslasche (18) in dem Loch (17) versehen ist, die für das mit Gewinde versehene Betätigungselement (16) verfügbar ist.

5. Vorrichtung nach einem der vorangehenden Ansprüche, **dadurch gekennzeichnet, dass** sich die Betätigungslasche (18) von einem zylindrischen Einsatz (40) erstreckt, der drehbar in einen komplementär geformten Sitz (41) eingesetzt ist, der an dem drehbaren Backenstützring (15) ausgebildet ist.

## Revendications

1. Un dispositif de verrouillage (10) pour un corps cylindrique symétrique fixant un produit semi-fini à un poste de travail, comprend:
- un corps de verrouillage annulaire (11) avec une pluralité de mâchoires d'engagement mobiles (14), qui à son tour comprend une plaque de base (12) qui supporte un mécanisme à came (13) pour déplacer dans une direction radiale ladite pluralité de mâchoires d'engagement mobiles (14),
- ledit mécanisme à came (13) comprenant une bague de support de mâchoire rotative (15) qui est adaptée pour être tournée au moyen d'un élément d'actionnement fileté (16), qui est vissé dans un trou correspondant (17) dans ladite plaque de base (12) et est conçu pour agir sur une patte de manoeuvre (18) qui s'étend depuis ladite bague rotative de support de mors (15),
ledit élément d'actionnement fileté (16) comprenant:
- une portion de tête lisse (19), agencée de manière à translater dans une première portion de guidage interne correspondante (20) dudit trou (17),
- une partie centrale (21) ayant une section transversale réduite, qui est adaptée pour recevoir la patte de manoeuvre (18) de l'anneau de support de mors (15),
- et une portion de queue filetée (22), avec un évidement profilé (23) pour un outil de vissage, qui est adapté pour être vissé à une deuxième portion externe filetée complémentaire correspondante (24) dudit trou (17),
**caractérisé en ce que** ledit corps de verrouillage annulaire (11) comprend un couvercle annulaire (25) avec des sièges radiaux (26) pour les mâchoires d'engagement mobiles (14), ledit couvercle annulaire (25) étant fixé à une saillie annulaire correspondante (27) qui est formé sur la plaque de base (12).

2. Dispositif selon la revendication 1, **caractérisé en ce que** ledit mécanisme à came (13) comprend ladite bague de support de mâchoire rotative (15), avec la patte de manoeuvre (18), des sièges à fentes (29) étant prévus sur ledit anneau de support de mâchoire rotative (15), un pour chaque mâchoire d'engagement mobile (14), lesdits sièges à fentes (29) s'étendant dans une direction tangentielle par rapport à un périmètre interne (33) de l'anneau rotatif (15), de sorte qu'une première extrémité interne (35) de chaque fente (29) est proche du périmètre interne (33), tandis que l'extrémité opposée (36) de ladite fente (29) est proche du périmètre externe (34) dudit anneau de support de mâchoire rotative (15).

3. Dispositif selon l'une des revendications précédentes, **caractérisé en ce que** chacune des mâchoires mobiles d'engagement (14) est munie d'une tige cylindrique de manoeuvre (37) insérée dans une fente correspondante (29).

4. Dispositif selon l'une des revendications précédentes, **caractérisé en ce que** ladite bague de support de mâchoire rotative (15) est insérée dans un siège correspondant (38) formé sur la plaque de base (12), ledit siège étant pourvu d'une ouverture traversante inférieure (39) pour le passage et le déplacement de la patte de manoeuvre (18) dans le trou (17), accessible à l'élément d'actionnement fileté (16).

5. Dispositif selon l'une des revendications précédentes, **caractérisé en ce que** la patte de manoeuvre (18) s'étend à partir d'un insert cylindrique (40) qui est inséré à rotation dans un siège de forme complémentaire (41) formé sur l'anneau de support de mors rotatif (15).
